# EUROPEAN PATENT SPECIFICATION

(11) **EP 3 504 081 B1**
(45) Date of publication and mention of the grant of the patent: **06.10.2021**
(21) Application number: 16914329.4
(22) Date of filing: 25.08.2016
(51) Int. Cl.: B60P 1/28, B61D 11/02, B62D 33/02, B65G 67/06, B65G 67/22, E21F 13/02

(54) **WORKING MACHINE**
ARBEITSMASCHINE
MACHINE DE TRAVAIL

(43) Date of publication of application: 03.07.2019
(73) Proprietor: Volvo Construction Equipment AB, 631 85 Eskilstuna (SE)
(72) Inventor: UNNEBÄCK, Joakim, 633 46 Eskilstuna (SE)
(74) Representative: Valea AB
(86) International application number: PCT/SE2016/050801
(87) International publication number: WO 2018/038658

(56) References cited:
- CA-A1- 2 940 597
- CA-A1- 2 940 597
- DE-A1- 3 224 306
- DE-A1- 3 224 306
- US-A- 3 233 558
- US-A- 3 233 558
- US-A- 4 351 243
- US-A- 4 351 243
- US-A- 4 633 785
- US-A1- 2002 175 009
- US-A1- 2004 040 792
- US-A1- 2004 080 206
- US-B1- 6 578 925
- US-B1- 6 578 925

## Description

### TECHNICAL FIELD

The present invention relates to a working machine according to the preamble of claim 1. Further, the present invention relates to a working machine assembly according to the preamble of claim 10. Moreover, the present invention relates to a method for loading material onto a plurality of working machines according to the preamble of claim 11.

### BACKGROUND

Material moving operations may include loading material onto a plurality of working machines and thereafter transporting the material, using the working machines, to an offloading site.

The material may be loaded onto the working machines utilizing a discharge arrangement adapted to discharge material from a position above a working machine into a working machine receptacle. Such a procedure may for instance be useful if the material is prone to spread out when discharged into the receptacle. For instance, the procedure may be beneficial if the material comprises or substantially consists of granular material such as at least one of sand, soil, clay, earth and gravel. The discharge arrangement can be used for loading material onto a plurality of working machines.

Although the above loading procedure has several advantages, the procedure generally involves a step of controlling the material discharge in dependence of the position of the working machines in order to avoid that material is discharged outside the working machines' receptacles. CA 2 940 597 A1 discloses a working machine according to the preamble of claim 1.

### SUMMARY

An object of the present invention is to provide a working machine that can form part of a plurality of working machines onto which material can be loaded with a low risk of discharging material outside of the working machines' receptacles.

The above object is achieved by a working machine according to claim 1.

As such, the present invention relates to a working machine comprising a receptacle portion for accommodating load. The working machine is adapted to have a load receiving condition in which the receptacle portion comprises an open load receiving area outwardly delimited by a load receiving area circumference. The working machine extends in at least a vertical direction and the working machine comprises a circumference projection being a projection of the load receiving area circumference in the vertical direction onto a ground on which the working machine is located.

According to the present invention, the working machine is such that it, in the load receiving condition, can assume a position relative to a second working machine of the same type, in which position the circumference projections of the two working machines at least partially overlap.

The above recited ability to have overlapping circumference projections implies that two or more working machines of the same type can be arranged in a loading condition in which they can be filled with material with a low risk of discharging material outside the working machines' receptacles.

Preferably, the working machine is such that the above-mentioned at least partial overlap can occur when two working machines of the same type are located on the same vertical level.

For instance, the above recited ability implies that two or more machines of the same type may be arranged so as to pass a material discharge station that continuously discharges material as the two or more machines pass the material discharge station but where the material loading nevertheless may be performed with a low risk of discharging material outside the working machines' receptacles.

As such, in contrast to working machine types that cannot be arranged with overlapping circumference projections, generally resulting in that the material discharge station must be controlled so as to intermittently distribute material into the receptacle of each working machine in order not to discharge material outside the receptacles, the above working machine does not necessarily require an intermittent distribution capacity of the distribution station. Thus, the working machine according to the present invention implies that a plurality of working machines of the same type can receive material from a continuously discharging station, such as a conveyor belt or the like.

Optionally, the working machine extends in a longitudinal direction, parallel to an intended direction of travel of the working machine. The circumference projection has a front circumference projection portion and a rear circumference projection portion located on opposing sides of the working machine in the longitudinal direction. The working machine is such that it can assume a position relative to the second working machine in which the front circumference portion of the working machine at least partially overlap the rear circumference portion of the second working machine.

The ability to obtain an overlap between the front circumference portion of a first working machine and the rear circumference portion of the second working machine implies that two or more working machines of the same type may form part of a working machine train that moves relative to a material discharging station and receives material therefrom.

Optionally, the open load receiving area has a load receiving length in the longitudinal direction. The working machine is such that it can assume a position relative to the second working machine in which the front circumference portion of the working machine overlaps the rear circumference portion of the second working machine by at least 2%, preferably at least 5%, more preferred at least 8%, of the load receiving length.

An overlap according to any one of the above distances implies an appropriately low risk of discharging material outside of the working machines' receptacles.

Optionally, the load receiving area circumference comprises a front circumference portion and a rear circumference portion being located on opposing sides of the working machine in the longitudinal direction. The front circumference portion and the rear circumference portion are located at different heights in the vertical direction.

The above different heights imply a possibility to obtain the overlapping circumference projections in a straightforward manner.

Optionally, the front circumference portion constitutes the forwardmost portion of the working machine and/or the rear circumference portion constitutes the rearmost portion of the working machine.

Optionally, the working machine is a self-propelled working machine.

Optionally, the working machine is a driverless working machine.

Optionally, the working machine comprises propulsion means, such as wheels or crawlers, for propelling the working machine. Moreover, the open load receiving area has a load receiving length in the longitudinal direction. A smallest distance from the propulsion means to the rear circumference portion in the longitudinal direction is at least 5%, preferably at least 10%, of the load receiving length, and/or a smallest distance from the propulsion means to the forward circumference portion in the longitudinal direction is at least at least 5%, preferably at least 10%, of the load receiving length.

The above difference ranges imply a possibility to obtain the overlapping circumference projections in a straightforward manner.

A second aspect of the present invention relates to a working machine assembly comprising at least two working machines according to the first aspect of the present invention.

A third aspect of the present invention relates to a working machine assembly comprising a first working machine and a second working machine, each one of the first and second working machines comprising a receptacle portion for accommodating load. Each one of the first and second working machines is adapted to have a load receiving condition in which the receptacle portion comprises an open load receiving area outwardly delimited by a load receiving area circumference. Each one of the first and second working machines extends in at least a vertical direction and comprises a circumference projection being a projection of the load receiving area circumference in the vertical direction onto a ground on which the working machines are located.

According to the third aspect of the present invention, the working machine assembly is such that the first working machine, in the load receiving condition, can assume a position relative to the second working machine, in which position the circumference projection of the first working machine at least partially overlaps the circumference projection of the second working machine.

A fourth aspect of the present invention relates to a method for loading material onto a plurality of working machines. Each working machine comprises a receptacle portion for accommodating load. The receptacle portion comprises an open load receiving area outwardly delimited by a load receiving area circumference. Each working machine extends in at least a vertical direction and each working machine comprising a circumference projection being a projection of the load receiving area circumference in the vertical direction onto a ground on which the working machine is located. The method according to the fourth aspect of the present invention further comprises arranging at least two working machines in a loading configuration in which the circumference projections of the two working machines at least partially overlap.

The above method implies that material can be loaded into the receptacles of the working machines with a low risk of discharging material outside of the working machines' receptacles.

Optionally, the two working machines are of the same type.

Optionally, the material is offloaded from a discharge position located above the at least two working machines in the vertical direction, the method further comprising moving the two working machines in the loading configuration relative to the discharge position.

Optionally, the method comprises continuously loading material onto the plurality of working machines.

### BRIEF DESCRIPTION OF THE DRAWINGS

With reference to the appended drawings, below follows a more detailed description of embodiments of the invention cited as examples.

In the drawings:
- Fig. 1: is a side view of an embodiment of a working machine;
- Fig. 2: is a top view of the Fig. 1 embodiment;
- Fig. 3: is a top view of another embodiment of a working machine;
- Fig. 4: is a side view of two working machines;
- Fig. 5: is a top view of the Fig. 4 working machines;
- Fig. 6: is a side view of a working machine;
- Fig. 7: is a side view of an embodiment of a working machine assembly, and
- Fig. 8: illustrates a side view and a flow chart of a method.

It should be noted that the appended drawings are not necessarily drawn to scale and that the dimensions of some features of the present invention may have been exaggerated for the sake of clarity.

### DETAILED DESCRIPTION OF PREFERRED EMBODIMENTS

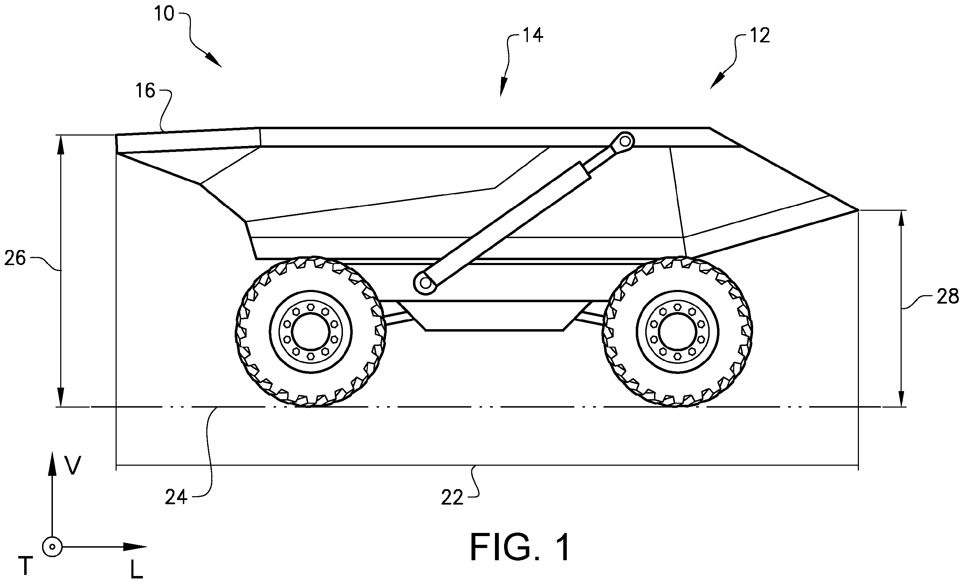

Fig. 1 illustrates an embodiment of a working machine 10. The Fig. 1 working machine 10 comprises a receptacle portion 12 for accommodating load. Purely by way of example, and as is indicated in Fig. 1, the receptacle portion 12 may be a loading platform of the working machine 10. The working machine 10 is adapted to have a load receiving condition in which the receptacle portion 12 comprises an open load receiving area 14 outwardly delimited by a load receiving area circumference 16. In the Fig. 1 embodiment, the working machine 10 is adapted to always assume the load receiving condition. In other words, the working machine 10 embodiment illustrated in Fig. 1 comprises a receptacle portion 12 which always comprises an open load receiving area 14 outwardly delimited by a load receiving area circumference 16. However, it is also envisioned that embodiments of the working machine may comprise cover means (not shown), such as a lid, that is adapted to cover at least a portion of the receptacle portion 12 and which cover means can be moved in order to obtain the open load receiving area 14 to thereby arrive at the open load receiving area 14.

Generally, the open load receiving area 14 may be an area that is directly accessible from the environment surrounding the working machine 10. For instance, the open load receiving area 14 may be an area that is directly accessible from the above of the receptacle portion 12.

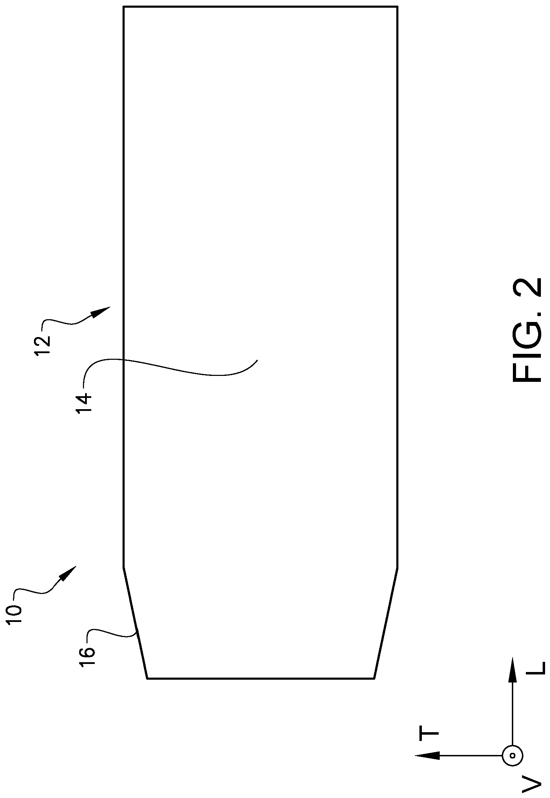

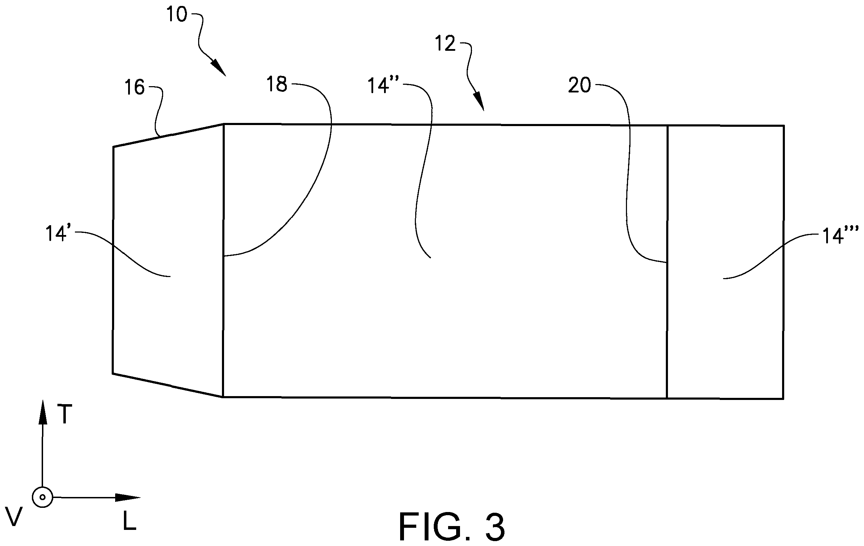

As regards the load receiving area circumference 16, reference is made to Fig. 2 which is a top view of the Fig. 1 working machine 10. As may be gleaned from Fig. 2, the load receiving area circumference 16 may form a closed loop that fully encloses a continuously open load receiving area 14. However, as indicated in Fig. 3 for example, it is also envisioned that embodiments of the working machine 10 may comprise one or more internal partitioning walls 18, 20 partitioning the open load receiving area 14 into two or more compartments. In the Fig. 3 embodiment, the open load receiving area 14 is partitioned into three compartments 14', 14'' 14‴.

Turning back to Fig. 1, it is indicated that the working machine 10 extends in at least a vertical direction V and the working machine comprises a circumference projection 22 being a projection of the load receiving area circumference 16 in the vertical direction V onto a ground 24 on which the working machine 10 is located. Fig. 1 further illustrates that the working machine 10 may also extend in a longitudinal direction L, parallel to an intended direction of travel of the working machine 10, and a transversal direction T, perpendicular to each one of the vertical direction V and the longitudinal direction L.

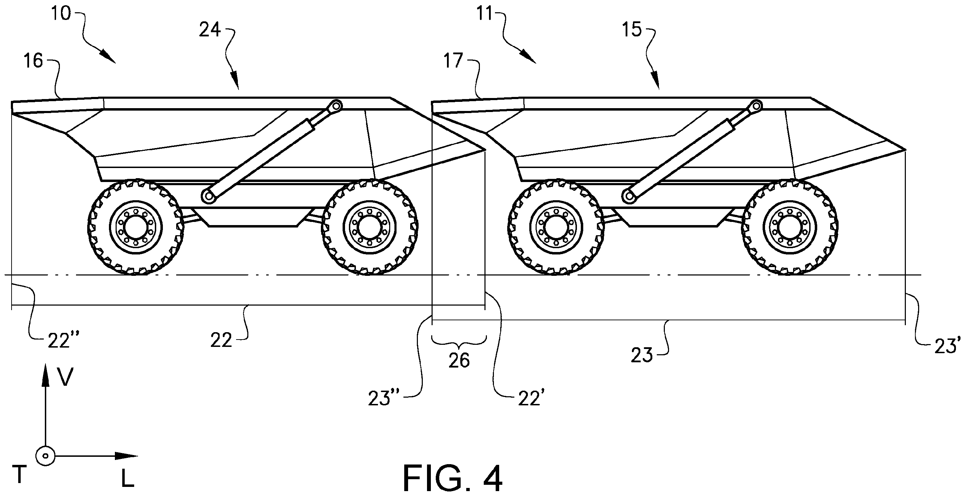

With reference to Fig. 4, the working machine 10 is such that it, in the load receiving condition, can assume a position relative to a second working machine 11 of the same type, in which position the circumference projections 22, 23 of the two working machines 10, 11, respectively, at least partially overlap. The area of overlap of the circumference projections 22, 23 is indicated by reference numeral 26 in Fig. 4.

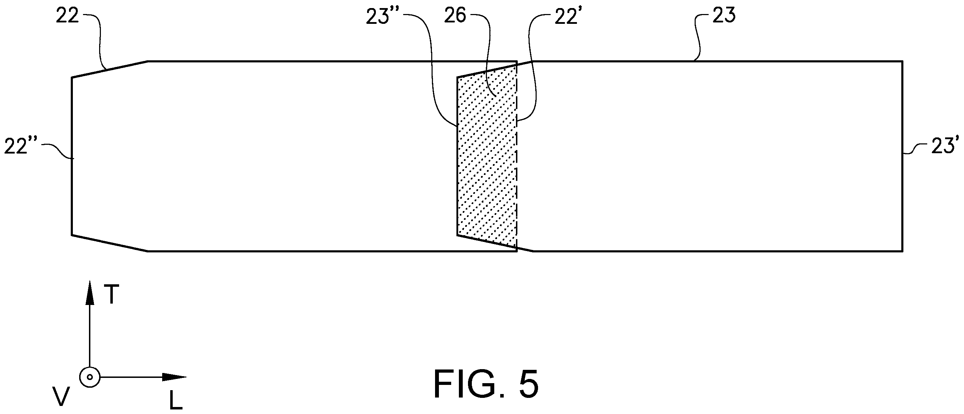

A top view of the circumference projections 22, 23, when the working machines 10, 11 are in the Fig. 4 position, is illustrated in Fig. 5. Fig. 5 further illustrates the overlap area 26, viz the area cut by the circumference projections 22, 23.

Generally, overlap of the circumference projections 22, 23 may be obtained on any side of the working machines 10, 11. For instance, if the overlap is obtained along the longitudinal sides of the working machines 10, 11 the working machines can advantageously be used in a loading procedure in which a material discharging system (not shown) moves relative to the ground as the system discharges material into the receptacle portion of each one of the working machines.

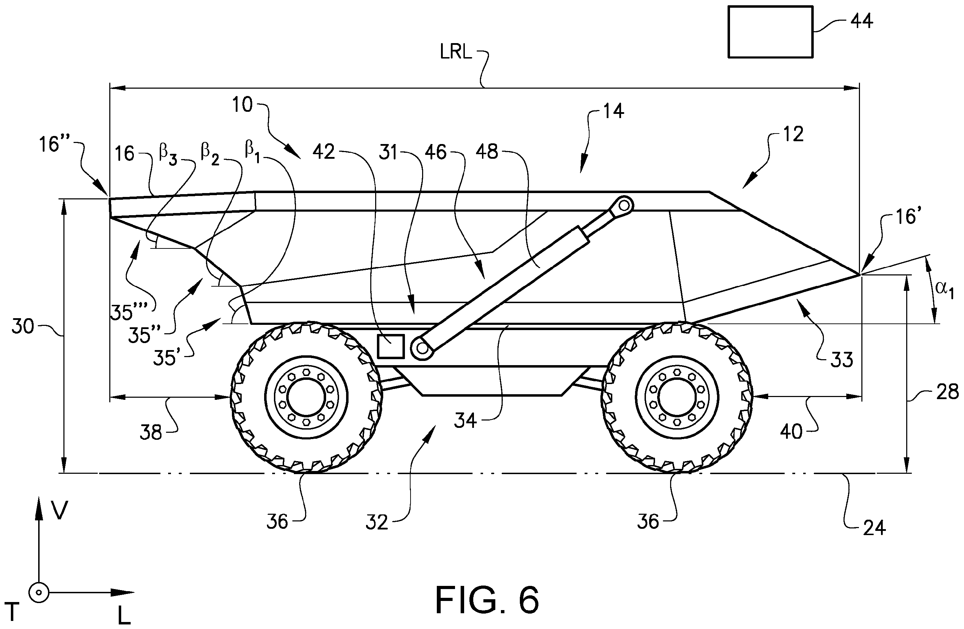

However, Fig. 4 and Fig. 5 illustrate a preferred embodiment in which the working machine 10 extends in the longitudinal direction L. The circumference projection 22 of the first working machine 10 has a front circumference projection portion 22' and a rear circumference projection portion 22" located on opposing sides of the first working machine 10 in the longitudinal direction L. In a similar vein, the circumference projection 23 of the second working machine 11 has a front circumference projection portion 23' and a rear circumference projection portion 23" located on opposing sides of the second working machine 11 in the longitudinal direction L. The working machine 10 is such that it can assume a position relative to the second working machine 11, in which position the front circumference portion 22' of the working machine 10 at least partially overlaps the rear circumference portion 23" of the second working machine 11. Purely by way of example, the above overlap 26 may be at least 2%, preferably at least 5%, more preferred at least 8% of the load receiving length LRL (see Fig. 6) of the open load receiving area 14 in said longitudinal direction L.

Fig. 6 illustrates that the load receiving area circumference 16 may comprise a front circumference portion 16' and a rear circumference portion 16'' being located on opposing sides of the working machine 10 in the longitudinal direction L. In the Fig. 6 embodiment, the front circumference portion 16' and the rear circumference portion 16'' are located at different heights in the vertical direction V. As may be gleaned from Fig. 6, the front circumference portion 16' is located at a first height 28, i.e. at a first distance from the ground 24 in the vertical direction V, and the rear circumference portion 16" is located at a second height 30, i.e. at a second distance from the ground 24 in the vertical direction V, and the first height 28 is lower than the second height 30. However, other embodiments of the working machine are also envisioned in which the second height 30 is lower than the first height 28.

Purely by way of example, the difference between the first height 28 and the second height 30 may be at least 0.3 meters, preferably at least 0.5 meters.

Further, in the Fig. 6 embodiment, the receptacle portion 12 comprises a base panel 31. In the Fig. 6 embodiment, the base panel 31 extends substantially in the horizontal plane, viz the plane extending in the longitudinal and transversal direction L, T. Additionally, in the Fig. 6 embodiment, the front circumference portion 16' is connected to the base panel 31 by means of a front panel 33 that forms a front angle α₁ with the horizontal plane. Purely by way of example, the front angle α₁ may be within the range of 10°- 50°.

Moreover, the base panel 31 may be connected to the rear circumference portion 16" by means of two or more rear panels. Each one of the rear panels forms an angle with the horizontal plane, and the rear panel proximal to the base panel 31 forms the largest angle with the horizontal plane and the rear panel proximal to the rear circumference portion 16" forms the smallest angle with the horizontal plane 31.

In the Fig. 6 embodiment, the base panel 31 is connected to the rear circumference portion 16'' by means of three rear panels 35', 35'', 35‴. The first rear panel 35' forms a first rear angle β₁ with the horizontal plane, the second rear panel 35'' forms a second rear angle β₂ with the horizontal plane and the third rear panel 35‴ forms a third rear angle β₃ with the horizontal plane. The first rear angle β₁ is greater than the second rear angle β₂, which in turn is greater than the third rear angle β₃.

Purely by way of examples, the first rear angle β₁ may be within the range of 10°- 40°, the second rear angle β₂ may be within the range of 50°- 80° and the third rear angle β₃ may be within the range of 100°- 160°.

The rear angles, in particular first rear angle β₁, may be determined in dependence of material characteristics of the material intended to be loaded into the receptacle portion.

It should be noted that, in embodiments of the working machine 10, the base panel 31 may be connected to the rear circumference portion 16" by means of two panels (not shown). As a further alternative, in embodiments of the working machine 10, the base panel 31 may be connected to the rear circumference portion 16" by means of a single panel (not shown), for instance a curved panel (not shown).

Moreover, in embodiments of the working machine 10, the front circumference portion 16' constitutes the forwardmost portion of the working machine 10 and/or the rear circumference portion 16" constitutes the rearmost portion of the working machine 10. In the Fig. 6 embodiment, the front circumference portion 16' constitutes the forwardmost portion and the rear circumference portion 16" constitutes the rearmost portion of the working machine 10.

Moreover, as may be gleaned from Fig. 6 for instance, the working machine is a self-propelled working machine 10. As such, the Fig. 6 working machine 10 comprises a propulsion arrangement 32 which in turn comprises a power source 34, such as an internal combustion engine and/or an electric motor, connected to propulsion means 36, such as wheels or crawlers.

Moreover, as indicated in Fig. 6, the working machine comprises a smallest distance 38 from the propulsion means 36 to the rear circumference portion 16" in the longitudinal direction L and a smallest distance 40 from the propulsion means 36 to the forward circumference portion 16' in the longitudinal direction L. Further, the open load receiving area 14 has a load receiving length LRL in the longitudinal direction L. Purely by way of example, the load receiving length LRL may be within the range of 5 to 20 meters, alternatively within the range of 8 - 12 meters.

Preferably, each one of the above smallest distances 38, 40 is at least 5%, preferably at least 10 %, of the load receiving length LRL.

The working machine 10 may be a driverless working machine. To this end, again with reference to Fig. 6, the working machine 1 may comprise a receiver 42 adapted to receive control signals from an external transmission unit 44.

Moreover, as is indicated in Fig. 6, embodiments of the working machine 10 may comprise a tilting arrangement 46, such as a tilting arrangement comprising one or more hydraulic actuators 48, for tilting the receptacle portion 12 of the working machine 10.

Although the above discussed embodiments of the working machine are such that two machines of the same type have circumference projections that can least partially overlap, it is also envisioned that a working machine assembly according to the present invention may comprise two different types of working machines having circumference projections that can least partially overlap.

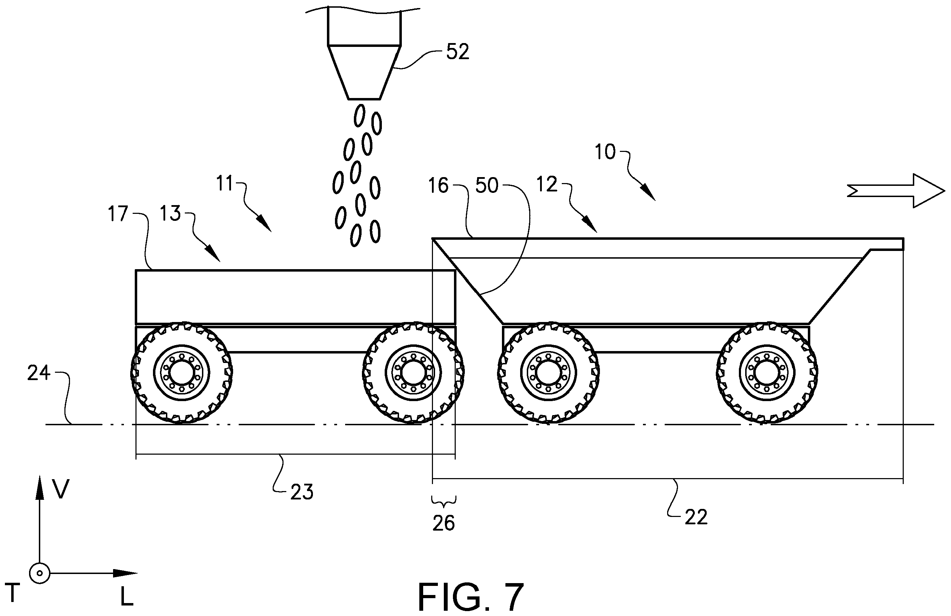

To this end, reference is made to Fig. 7 illustrating an embodiment of a working machine assembly comprising a first working machine 10 and a second working machine 11. The first and second working machines are of different types.

Each one of the first and second working machines 10, 11 comprises a receptacle portion 12, 13 for accommodating load. Each one of the first and second working machines is adapted to have a load receiving condition in which the receptacle portion comprises an open load receiving area 14, 15 outwardly delimited by a load receiving area circumference 16, 17. Each working machine 10, 11 extends in at least a vertical direction V and each working machine 10, 11 comprises a respective circumference projection 22, 23 being a projection of the load receiving area circumference 16, 17 in the vertical direction V onto a ground 24 on which the working machines are located.

The Fig. 7 working machine assembly is such that the first working machine 10 can assume a position relative to the second working machine 11, in which position the circumference projection 22 of the first working machine 10 at least partially overlaps the circumference projection 23 of the second working machine 11.

In the Fig. 7 embodiment, such an overlap is obtained by virtue of the fact that the load receiving area circumference 16 of the first working machine 10 is located on a higher level that the load receiving area circumference 17 of the second working machine 11. Moreover, the receptacle portion 12 of the first working machine 10 comprises at least one inclined side surface 50 enabling a portion of the load receiving area circumference 16 of the first working machine 10 to extend over the receptacle portion 13 of the second working machine, thereby creating an area of overlap.

The two types of working machines illustrated in Fig. 7 may form a material-receiving train adapted to receive material from material discharge station 52. For instance, a material-receiving train may be formed by alternately arranging working machines of the first type and working machines of the second type.

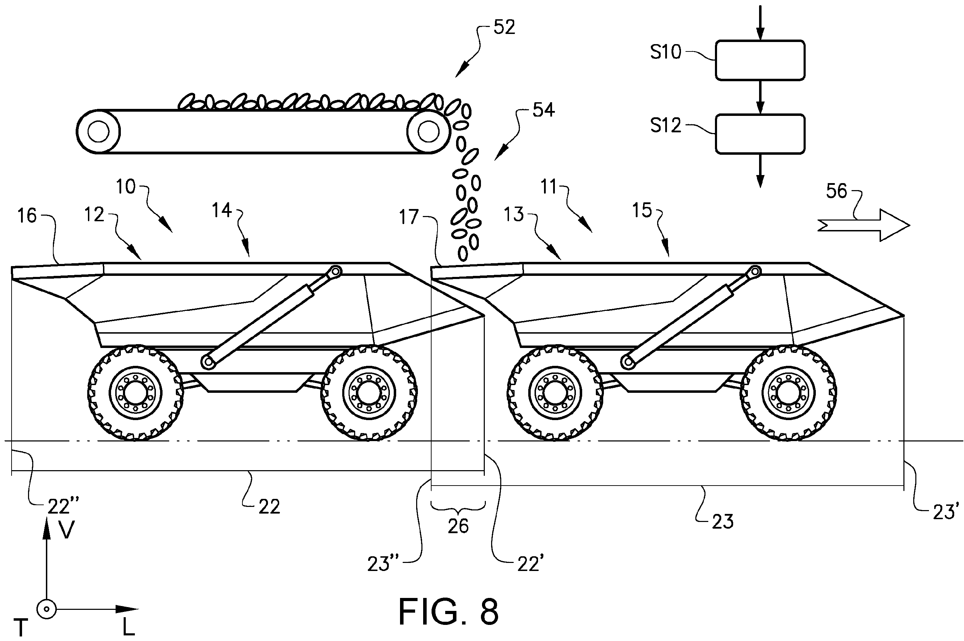

Fig. 8 illustrates an embodiment of a method for loading material onto a plurality of working machines 10, 11. As has been discussed hereinabove, each working machine 10, 11 comprises a receptacle portion 12, 13 for accommodating load. Each receptacle portion 12, 13 in turn comprises an open load receiving area 14, 15 outwardly delimited by a load receiving area circumference 16, 17. Each working machine 10, 11 extends in at least a vertical direction V with the working machine comprising a circumference projection 22, 23 being a projection of the load receiving area circumference 16, 17 in the vertical direction V onto a ground 24 on which the working machines are located.

The method according to the Fig. 8 embodiment of the invention further comprises a step S10 of arranging at least two working machines 10, 11 in a loading configuration in which the circumference projections 22, 23 of the two working machines at least partially overlap. Such a configuration is illustrated in Fig. 8. When the working machines 10, 11 have assumed a configuration with overlapping circumference projections, the method may comprise a step S12 of operating a discharge arrangement 52 so as to discharge material 54 into one or more of the receptacle portion 12, 13. In the Fig. 8 embodiment, the discharge arrangement 52 is illustrated as a conveyor belt which is a preferred implementation of a discharge arrangement. However, other types of discharge arrangements are also envisioned.

As is indicated in Fig. 8, the above-mentioned method may be used for two or more working machines 10, 11 of the same type. Moreover, in the Fig. 8 embodiment, the working machines 10, 11 move in the direction of the arrow 56. However, it is also envisioned that the working machines 10, 11 may move in the opposite direction during a loading procedure.

It is to be understood that the present invention is not limited to the embodiments described above and illustrated in the drawings; rather, the skilled person will recognize that many changes and modifications may be made without departing from the scope of the claims.

## Claims

1. A working machine (10) comprising a receptacle portion (12) for accommodating load, the working machine being adapted to have a load receiving condition in which said receptacle portion (12) comprises an open load receiving area (14) outwardly delimited by a load receiving area circumference (16), said working machine (10) extending in at least a vertical direction (V) and said working machine (10) comprising a circumference projection (22) being a projection of said load receiving area circumference (16) in said vertical direction (V) onto a ground (24) on which said working machine (10) is located, **characterized in that** said working machine (10) is such that it, in said load receiving condition, can assume a position relative to a second working machine (11) of the same type, in which position the circumference projections (22, 23) of the two working machines (10, 11) at least partially overlap.

2. The working machine (10) according to claim 1, wherein said working machine (10) extends in a longitudinal direction (L), parallel to an intended direction of travel of said working machine (10), said circumference projection (22) having a front circumference projection portion (22') and a rear circumference projection portion (22") being located on opposing sides of said working machine (10) in said longitudinal direction (L), said working machine (10) being such that it can assume a position relative to said second working machine (11) in which the front circumference portion (22') of the working machine (10) at least partially overlaps the rear circumference portion (23") of said second working machine (11).

3. The working machine (10) according to claim 2, wherein said open load receiving area (14) has a load receiving length (LRL) in said longitudinal direction (L), said working machine (10) being such that it can assume a position relative to said second working machine (11) in which the front circumference portion (22') of the working machine (10) overlaps the rear circumference portion (23") of said second working machine (11) by at least 2%, preferably at least 5%, more preferred at least 8%, of said load receiving length (LRL).

4. The working machine (10) according to claim 2 or claim 3, wherein said load receiving area circumference (16) comprises a front circumference portion (16') and a rear circumference portion (16") being located on opposing sides of said working machine (10) in said longitudinal direction (L), said front circumference portion (16') and said rear circumference portion (16") being located at different heights in said vertical direction (V).

5. The working machine (10) according to claim 4, wherein said front circumference portion (16') constitutes the forwardmost portion of said working machine and/or wherein said rear circumference portion (16") constitutes the rearmost portion of said working machine.

6. The working machine (10) according to any one of the preceding claims, wherein said working machine (10) is a self-propelled working machine (10).

7. The working machine (10) according to the preceding claim, wherein said working machine (10) is a driverless working machine (10).

8. The working machine (10) according to any one of claim 6 or claim 7, when dependent on claim 4, wherein said working machine (10) comprises propulsion means (36), such as wheels or crawlers, for propelling the working machine (10), said open load receiving area (14) having a load receiving length (LRL) in said longitudinal direction (L), a smallest distance from said propulsion means (36) to said rear circumference portion (16") in said longitudinal direction (L) being at least 5%, preferably at least 10% of said load receiving length (LRL), and/or a smallest distance from said propulsion means (36) to said forward circumference portion (16') in said longitudinal direction (L) being at least 5%, preferably at least 10% of said load receiving length (LRL).

9. A working machine (10) assembly comprising at least two working machines according to any one of the preceding claims.

10. A working machine assembly comprising a first working machine (10) and a second working machine (11), each one of said first and second working machines (10, 11) comprising a receptacle portion (12, 13) for accommodating load, each one of said first and second working machines (10, 11) being adapted to have a load receiving condition in which said receptacle portion (12, 13) comprises an open load receiving area (14, 15) outwardly delimited by a load receiving area circumference (16, 17), each one of said first and second working machines (10, 11) extending in at least a vertical direction (V) and comprising a circumference projection (22, 23) being a projection of said load receiving area circumference (16, 17) in said vertical direction (V) onto a ground (24) on which said working machines (10, 11) are located, **characterized in that** said working machine assembly is such that said first working machine (10) , in said load receiving condition, can assume a position relative to said second working machine (11), in which position the circumference projection (22) of said first working machine (10) at least partially overlaps the circumference projection (23) of said second working machine (11).

11. A method for loading material onto a plurality of working machines (10, 11), each working machine (10, 11) comprising a receptacle portion (12, 13) for accommodating load, said receptacle portion (12, 13) comprising an open load receiving area (14, 15) outwardly delimited by a load receiving area circumference (16, 17), each working machine (10, 11) extending in at least a vertical direction (V) and each working machine (10, 11) comprising a circumference projection (22, 23) being a projection of said load receiving area circumference (16) in said vertical direction (V) onto a ground (24) on which said working machine (10) is located, **characterized by**
arranging at least two working machines (10, 11) in a loading configuration in which the circumference projections (22, 23) of the two working machines (10, 11) at least partially overlap.

12. The method according to the preceding claim, wherein said two working machines (10, 11) are of the same type.

13. The method according to any one of the two preceding claims, wherein said material is offloaded from a discharge position located above said at least two working machines (10, 11) in said vertical direction (V), said method further comprising moving said two working machines (10, 11) in said loading configuration relative to said discharge position.

14. The method according to any one of the three preceding claims, wherein said method comprises continuously loading material onto said plurality of working machines (10, 11).

## Patentansprüche

1. Arbeitsmaschine (10), die einen Aufnahmeabschnitt (12) zum Unterbringen einer Last umfasst, wobei die Arbeitsmaschine angepasst ist, um einen Lastempfangszustand aufzuweisen, in dem der Aufnahmeabschnitt (12) einen offenen Lastempfangsbereich (14) umfasst, der nach außen durch einen Lastempfangsbereichsumfang (16) begrenzt ist, wobei sich die Arbeitsmaschine (10) in wenigstens einer vertikalen Richtung (V) erstreckt und die Arbeitsmaschine (10) eine Umfangsprojektion (22) umfasst, die eine Projektion des Lastempfangsbereichsumfangs (16) in der vertikalen Richtung (V) auf einen Boden (24) ist, auf dem sich die Arbeitsmaschine (10) befindet, **dadurch gekennzeichnet, dass** die Arbeitsmaschine (10) derart beschaffen ist, dass sie in dem Lastempfangszustand eine Position relativ zu einer zweiten Arbeitsmaschine (11) der gleichen Art annehmen kann, wobei sich in der Position die Umfangsprojektionen (22, 23) der zwei Arbeitsmaschinen (10, 11) wenigstens teilweise überlappen.

2. Arbeitsmaschine (10) nach Anspruch 1, wobei sich die Arbeitsmaschine (10) in einer Längsrichtung (L) parallel zu einer beabsichtigten Fahrtrichtung der Arbeitsmaschine (10) erstreckt, wobei die Umfangsprojektion (22) einen vorderen Umfangsprojektionsabschnitt (22') und einen hinteren Umfangsprojektionsabschnitt (22") aufweisen, die sich an gegenüberliegenden Seiten der Arbeitsmaschine (10) in der Längsrichtung (L) befinden, wobei die Arbeitsmaschine (10) derart beschaffen ist, dass sie eine Position relativ zu der zweiten Arbeitsmaschine (11) annehmen kann, in der der vordere Umfangsabschnitt (22') der Arbeitsmaschine (10) den hinteren Umfangsabschnitt (23") der zweiten Arbeitsmaschine (11) wenigstens teilweise überlappt.

3. Arbeitsmaschine (10) nach Anspruch 2, wobei der offene Empfangsbereich (14) eine Lastempfangslänge (load receiving length - LRL) in der Längsrichtung (L) aufweist, wobei die Arbeitsmaschine (10) derart beschaffen ist, dass sie eine Position relativ zu der zweiten Arbeitsmaschine (11) annehmen kann, in der der vordere Umfangsabschnitt (22') der Arbeitsmaschine (10) den hinteren Umfangsabschnitt (23") der zweiten Arbeitsmaschine (11) um wenigstens 2 %, bevorzugt wenigstens 5 %, stärker bevorzugt wenigstens 8 %, der Lastempfangslänge (LRL) überlappt.

4. Arbeitsmaschine (10) nach Anspruch 2 oder 3, wobei der
Lastempfangsbereichsumfang (16) einen vorderen Umfangsabschnitt (16') und einen hinteren Umfangsabschnitt (16") umfasst, die sich an gegenüberliegenden Seiten der Arbeitsmaschine (10) in der Längsrichtung (L) befinden, wobei sich der vordere Umfangsabschnitt (16') und der hintere Umfangsabschnitt (16") in der vertikalen Richtung (V) auf unterschiedlichen Höhen befinden.

5. Arbeitsmaschine (10) nach Anspruch 4, wobei der vordere Umfangsabschnitt (16') den vordersten Abschnitt der Arbeitsmaschine bildet und/oder wobei der hintere Umfangsabschnitt (16") den hintersten Abschnitt der Arbeitsmaschine bildet.

6. Arbeitsmaschine (10) nach einem der vorhergehenden Ansprüche, wobei die Arbeitsmaschine (10) eine selbstfahrende Arbeitsmaschine (10) ist.

7. Arbeitsmaschine (10) nach einem der vorhergehenden Ansprüche, wobei die Arbeitsmaschine (10) eine fahrerlose Arbeitsmaschine (10) ist.

8. Arbeitsmaschine (10) nach einem der Ansprüche 6 oder 7, wenn abhängig von Anspruch 4, wobei die Arbeitsmaschine (10) Antriebsmittel (36), wie etwa Räder oder Gleisketten, zum Antreiben der Arbeitsmaschine (10) umfasst, wobei der offene Lastempfangsbereich (14) eine Lastempfangslänge (LRL) in der Längsrichtung (L) aufweist, ein kleinster Abstand von den Antriebsmitteln (36) zu dem hinteren Umfangsabschnitt (16") in der Längsrichtung (L) wenigstens 5 %, bevorzugt wenigstens 10 %, der Lastempfangslänge (LRL) beträgt und/oder ein kleinster Abstand von den Antriebsmitteln (36) zu dem vorderen Umfangsabschnitt (16') in der Längsrichtung (L) wenigstens 5 %, bevorzugt wenigstens 10 %, der Lastempfangslänge (LRL) beträgt.

9. Anordnung für Arbeitsmaschinen (10), die wenigstens zwei Arbeitsmaschinen nach einem der vorhergehenden Ansprüche umfasst.

10. Anordnung für Arbeitsmaschinen, die eine erste Arbeitsmaschine (10) und eine zweite Arbeitsmaschine (11) umfasst, wobei jeweils die erste und die zweite Arbeitsmaschine (10, 11) einen Aufnahmeabschnitt (13) zum Unterbringen einer Last umfassen, wobei jeweils die erste und die zweite Arbeitsmaschine (10, 11) angepasst sind, um einen Lastempfangszustand aufzuweisen, in dem der Aufnahmeabschnitt (12, 13) einen offenen Lastempfangsbereich (14, 15) umfasst, der nach außen durch einen Lastempfangsbereichsumfang (16, 17) begrenzt ist, wobei sich jeweils die erste und die zweite Arbeitsmaschine (10, 11) in wenigstens einer vertikalen Richtung (V) erstrecken und eine Umfangsprojektion (22, 23) umfassen, die eine Projektion des Lastempfangsbereichsumfangs (16, 17) in der vertikalen Richtung (V) auf einen Boden (24) ist, auf dem sich die Arbeitsmaschinen (10, 11) befinden, **dadurch gekennzeichnet, dass** die Anordnung für Arbeitsmaschinen derart beschaffen ist, dass die erste Arbeitsmaschine (10) in dem Lastempfangszustand eine Position relativ zu der zweiten Arbeitsmaschine (11) annehmen kann, wobei in der Position die Umfangsprojektion (22) der ersten Arbeitsmaschine (10) wenigstens teilweise die Umfangsprojektion (23) der zweiten Arbeitsmaschine (11) überlappt.

11. Verfahren zum Laden von Material auf mehrere Arbeitsmaschinen (10, 11), wobei jede Arbeitsmaschine (10, 11) einen Aufnahmeabschnitt (12, 13) zum Unterbringen der Last umfasst, wobei der Aufnahmeabschnitt (12, 13) einen offenen Lastempfangsbereich (14, 15) umfasst, der nach außen durch einen Lastempfangsbereichsumfang (16, 17) begrenzt ist, wobei sich jede Arbeitsmaschine (10, 11) in wenigstens einer vertikalen Richtung (V) erstreckt und jede Arbeitsmaschine (10, 11) eine Umfangsprojektion (22, 23) umfasst, die eine Projektion des Lastempfangsbereichsumfangs (16) in der vertikalen Richtung (V) auf einen Boden (24) ist, auf dem sich die Arbeitsmaschine (10) befindet, **gekennzeichnet durch** das Anordnen von wenigstens zwei Arbeitsmaschinen (10, 11) in einer Ladekonfiguration, in der sich die Umfangsprojektionen (22, 23) der zwei Arbeitsmaschinen (10, 11) wenigstens teilweise überlappen.

12. Verfahren nach dem vorhergehenden Anspruch, wobei die zwei Arbeitsmaschinen (10, 11) von der gleichen Art sind.

13. Verfahren nach einem der zwei vorhergehenden Ansprüche, wobei das Material von einer Entladeposition, die sich über den wenigstens zwei Arbeitsmaschinen (10, 11) in der vertikalen Richtung (V) befindet, abgeladen wird, wobei das Verfahren ferner ein Bewegen der zwei Arbeitsmaschinen (10, 11) in die Ladekonfiguration relativ zu der Entladeposition umfasst.

14. Verfahren nach einem der drei vorhergehenden Ansprüche, wobei das Verfahren ein kontinuierliches Laden von Material auf die mehreren Arbeitsmaschinen (10, 11) umfasst.

## Revendications

1. Machine de travail (10) comprenant une partie de réceptacle (12) destinée à supporter une charge, la machine de travail étant adaptée pour avoir une condition de réception de charge dans laquelle ladite partie de réceptacle (12) comprend une zone de réception de charge ouverte (14) délimitée vers l'extérieur par une circonférence de zone de réception de charge (16), ladite machine de travail (10) s'étendant dans au moins une direction verticale (V) et ladite machine de travail (10) comprenant une saillie de circonférence (22) étant une saillie de ladite circonférence de zone de réception de charge (16) dans ladite direction verticale (V) sur un sol (24) sur lequel ladite machine de travail (10) est située, **caractérisée en ce que** ladite machine de travail (10) est telle que, dans ladite condition de réception de charge, elle peut occuper une position par rapport à une seconde machine de travail (11) du même type, dans laquelle position les saillies de circonférence (22, 23) des deux machines de travail (10, 11) se chevauchent au moins partiellement.

2. Machine de travail (10) selon la revendication 1, dans laquelle ladite machine de travail (10) s'étend dans une direction longitudinale (L), parallèle à une direction de déplacement prévue de ladite machine de travail (10), ladite saillie de circonférence (22) ayant une partie de saillie de circonférence avant (22') et une partie de saillie de circonférence arrière (22") étant situées sur des côtés opposés de ladite machine de travail (10) dans ladite direction longitudinale (L), ladite machine de travail (10) étant telle qu'elle peut occuper une position par rapport à ladite seconde machine de travail (11) dans laquelle la partie de circonférence avant (22') de la machine de travail (10) chevauche au moins partiellement la partie de circonférence arrière (23") de ladite seconde machine de travail (11).

3. Machine de travail (10) selon la revendication 2, dans laquelle ladite zone de réception de charge ouverte (14) a une longueur de réception de charge (LRL) dans ladite direction longitudinale (L), ladite machine de travail (10) étant telle qu'elle peut occuper une position par rapport à ladite seconde machine de travail (11) dans laquelle la partie de circonférence avant (22') de la machine de travail (10) chevauche la partie de circonférence arrière (23") de ladite seconde machine de travail (11) d'au moins 2 %, de préférence d'au moins 5 %, plus préférablement d'au moins 8 %, de ladite longueur de réception de charge (LRL).

4. Machine de travail (10) selon la revendication 2 ou la revendication 3, dans laquelle ladite circonférence de zone de réception de charge (16) comprend une partie de circonférence avant (16') et une partie de circonférence arrière (16") étant situées sur des côtés opposés de ladite machine de travail (10) dans ladite direction longitudinale (L), ladite partie de circonférence avant (16') et ladite partie de circonférence arrière (16") étant situées à des hauteurs différentes dans ladite direction verticale (V).

5. Machine de travail (10) selon la revendication 4, dans laquelle ladite partie de circonférence avant (16') constitue la partie la plus en avant de ladite machine de travail et/ou dans laquelle ladite partie de circonférence arrière (16") constitue la partie la plus en arrière de ladite machine de travail.

6. Machine de travail (10) selon l'une quelconque des revendications précédentes, dans laquelle ladite machine de travail (10) est une machine de travail (10) automotrice.

7. Machine de travail (10) selon la revendication précédente, dans laquelle ladite machine de travail (10) est une machine de travail (10) sans conducteur.

8. Machine de travail (10) selon l'une quelconque des revendications 6 ou 7, lorsqu'elle dépend de la revendication 4, dans laquelle ladite machine de travail (10) comprend un moyen de propulsion (36), tel que des roues ou des chenilles, destiné à propulser la machine de travail (10), ladite zone de réception de charge ouverte (14) ayant une longueur de réception de charge (LRL) dans ladite direction longitudinale (L), une distance la plus petite dudit moyen de propulsion (36) jusqu'à ladite partie de circonférence arrière (16") dans ladite direction longitudinale (L) étant d'au moins 5 %, de préférence d'au moins 10 % de ladite longueur de réception de charge (LRL), et/ou une distance la plus petite dudit moyen de propulsion (36) jusqu'à ladite partie de circonférence avant (16') dans ladite direction longitudinale (L) étant d'au moins 5 %, de préférence d'au moins 10 % de ladite longueur de réception de charge (LRL).

9. Ensemble machine de travail (10) comprenant au moins deux machines de travail selon l'une quelconque des revendications précédentes.

10. Ensemble machine de travail comprenant une première machine de travail (10) et une seconde machine de travail (11), chacune desdites première et seconde machines de travail (10, 11) comprenant une partie de réceptacle (12, 13) destinée à supporter une charge, chacune desdites première et seconde machines de travail (10, 11) étant adaptée pour avoir une condition de réception de charge dans laquelle ladite partie de réceptacle (12, 13) comprend une zone de réception de charge ouverte (14, 15) délimitée vers l'extérieur par une circonférence de zone de réception de charge (16, 17), chacune desdites première et seconde machines de travail (10, 11) s'étendant dans au moins une direction verticale (V) et comprenant une saillie de circonférence (22, 23) étant une saillie de ladite circonférence de zone de réception de charge (16, 17) dans ladite direction verticale (V) sur un sol (24) sur lequel lesdites machines de travail (10, 11) sont situées, **caractérisé en ce que** ledit ensemble machine de travail est tel que ladite première machine de travail (10), dans ladite condition de réception de charge, peut occuper une position par rapport à ladite seconde machine de travail (11), dans laquelle position la saillie de circonférence (22) de ladite première machine de travail (10) chevauche au moins partiellement la saillie de circonférence (23) de ladite seconde machine de travail (11).

11. Procédé destiné à charger du matériau sur une pluralité de machines de travail (10, 11), chaque machine de travail (10, 11) comprenant une partie de réceptacle (12, 13) destinée à supporter une charge, ladite partie de réceptacle (12, 13) comprenant une zone de réception de charge ouverte (14, 15) délimitée vers l'extérieur par une circonférence de zone de réception de charge (16, 17), chaque machine de travail (10, 11) s'étendant dans au moins une direction verticale (V) et chaque machine de travail (10, 11) comprenant une saillie de circonférence (22, 23) étant une saillie de ladite circonférence de zone de réception de charge (16) dans ladite direction verticale (V) sur un sol (24) sur lequel ladite machine de travail (10) est située, **caractérisé par** la disposition d'au moins deux machines de travail (10, 11) dans une configuration de chargement dans laquelle les saillies de circonférence (22, 23) des deux machines de travail (10, 11) se chevauchent au moins partiellement.

12. Procédé selon la revendication précédente, dans lequel lesdites deux machines de travail (10, 11) sont du même type.

13. Procédé selon l'une quelconque des deux revendications précédentes, dans lequel ledit matériau est déchargé d'une position de déchargement située au-dessus desdites au moins deux machines de travail (10, 11) dans ladite direction verticale (V), ledit procédé comprenant en outre le déplacement desdites deux machines de travail (10, 11) dans ladite configuration de chargement par rapport à ladite position de déchargement.

14. Procédé selon l'une quelconque des trois revendications précédentes, dans lequel ledit procédé comprend le chargement en continu de matériau sur ladite pluralité de machines de travail (10, 11).
